# EUROPEAN PATENT APPLICATION

(11) **EP 3 974 033 A1**
(43) Date of publication of application: **30.03.2022**
(21) Application number: 20809057.1
(22) Date of filing: 19.05.2020
(51) Int. Cl.: A62C 3/16, E04B 1/94, F16L 5/04, H02G 3/22

(54) **FIRE RESISTANT MEMBER, FIRE PREVENTING STRUCTURE, AND METHOD FOR INSTALLING FIRE PREVENTING STRUCTURE**

(30) Priority: 23.05.2019 JP 2019097138
(71) Applicant: FURUKAWA ELECTRIC CO., LTD., Chiyoda-ku Tokyo 100-8322 (JP)
(72) Inventor: HIDESHIMA, Yu, Tokyo 100-8322 (JP); ANDO, Kazuya, Tokyo 100-8322 (JP); KOZAWA, Eiji, Tokyo 100-8322 (JP); MORI, Daishiro, Tokyo 100-8322 (JP); DAICHO, Ayako, Tokyo 100-8322 (JP)
(74) Representative: Goddar, Heinz J.
(86) International application number: PCT/JP2020/019751
(87) International publication number: WO 2020/235549

(57) **Abstract**

A fire resistant member (1) consists mainly of a foam body (13a), which is a first foam body, and metal tape (5), for example. The form body (13a) is a resin foam body, and is a flame-retardant sponge such as urethane. A thermal expansion material (8) is dispersed inside the foam body (13a). The foam body (13a) is rolled up to form a cylindrical body (3). That is, a slit (11) is formed in the axial direction of the cylindrical body (3), at an abutting portion of end surfaces of the foam body (13a), in a portion of the cylindrical body (3) in the circumferential direction, and the slit (11) allows the cylindrical body (3) to be opened in a C-shape. A plurality of incisions (9a) are formed in both end parts of the cylindrical body (3), forming tongue-shaped pieces (7a), which are first tongue-shaped pieces. The tongue-shaped pieces (7a) are folded toward a central direction in both end parts of the cylindrical body (3). Opening portions at both ends of the cylindrical body (3) are substantially closed by the plurality of tongue-shaped pieces (7a).

## Description

### TECHNICAL FIELD OF THE INVENTION

The present invention relates to a fires resistant member that enables a through portion, such as a pipe or a cable passing through a partitioning section, to have fire resistant ability.

### BACKGROUND OF THE INVENTION

In a building or the like, there are cases in which pipes and cables (hereinafter, simply called as a long body/long bodies) are laid through rooms partitioned by partitioning sections. In such cases, once there is a fire in one room, for example, the fire may spread throughout the entire building travelling along the long bodies, causing severe damage.

As a fire preventing structure for such long bodies that penetrate partitioning sections, there is a method in which thermally expandable putty or mortar is filled into gaps between the long body and a through hole (Patent Document 1, for example).

However, it is a difficult operation filling the thermally expandable member directly around the long body. This also increases the cost since excess amount of the thermally expandable material is necessary.

On the other hand, there is a fire resistant member including a substantially cylindrical main body, a thermally expandable member provided on an inner surface of the main body, and a foam body provided on an inner periphery surface of the main body and the thermally expandable member, in which convex-concave shapes are formed on an inner surface side of the foam body (Patent Document 2, for example).

### RELATED ART

### PATENT DOCUMENTS

[Patent Document 1] Japanese Unexamined Patent Application Publication No. 1997-262305 (JP-A-1997-262305)
[Patent Document 2] Japanese Unexamined Patent Application Publication No. 2016-112345 (JP-A-2016-112345)

### SUMMARY OF THE INVENTION

### (PROBLEMS TO BE SOLVED BY THE INVENTION)

However, when a foam body is disposed around a long body and a thermally expandable member is disposed on an outer periphery of the foam body as in Patent Document 2, it is sometimes difficult to have expected fire resistant performance, especially in a case in which the long body is disposed inside a through hole with a large diameter. For example, if the diameter of the through hole is large, a distance between the thermally expandable member and the long body is long, and thus a larger amount of expansion is required to seal the through hole. This requires more time to seal the through hole and more thermally expandable member.

Also, although the structure in Patent Document 2 excels in installation and can provide high fire resistant performance for a through hole with a diameter that is less than a predetermined value, such the structure includes many components such as the main body, the thermally expandable member, and the foam body. This leads to an increase in cost and weight. Thus, a fire resistant member that is applicable to a larger through hole and has a simpler structure has been desired.

The present invention was made in view of such problems. Its object is to provide a fire resistant member that has a simple structure and can be applied to a large through hole, and the like.

### (MEANS FOR SOLVING PROBLEMS)

To achieve the above object, a first aspect of the invention is a fire resistant member that is inserted into a through hole in a partitioning section. The fire resistant member includes a first foam body in which a thermal expansion material is dispersed. The first foam body is rolled up to form a cylindrical body, and a plurality of first tongue-shaped pieces pointing toward a center are disposed in a circumferential direction of the cylindrical body at a plurality of positions in an axial direction of the cylindrical body.

A plurality of incisions may be formed at both end parts of the cylindrical body forming the first tongue-shaped pieces that are bent toward the center at both end parts of the cylindrical body.

The first tongue-shaped pieces may be fixed to an inner surface of the cylindrical body. That is, forming positions of the first tongue-shaped pieces are not limited to the both end parts of the cylindrical body. Also, the forming positions of the first tongue-shaped pieces in the circumferential direction may not be on the same plane.

It is preferable that forming positions in the circumferential direction of the first tongue-shaped pieces on the end part at a part of the axial direction of the cylindrical body and forming positions in the circumferential direction of the first tongue-shaped pieces at another part of the axial direction of the cylindrical body are shifted from each other.

The cylindrical body may be formed with a second foam body, including the dispersed thermal expansion material, that is wound around an outer periphery part of the first foam body, and a plurality of incisions may be formed at one end part of the second foam body forming second tongue-shaped pieces. The second tongue-shaped pieces may be bent outward at a side of the one end part of the cylindrical body forming a flange portion.

The second tongue-shaped pieces may be formed between the first tongue-shaped pieces at a side of the one end part of the cylindrical body and the second tongue-shaped pieces may be bent outward forming the flange portion.

A metal tape or a metal plate is preferably wound around the outer periphery part of the cylindrical body.

It is preferable that there is a part of the outer periphery part of the cylindrical body in which the cylindrical body is exposed in the circumferential direction without having the metal tape or the metal plate being wound around.

A length of the first tongue-shaped piece may be longer than a half of an inner diameter of the cylindrical body.

A third foam body including the dispersed thermal expansion material may be attached inside the cylindrical body.

According to the first aspect of the invention, a fire preventing structure with excellent workability can be obtained without using mortar or the like. Also, since the foam body forming the cylindrical body includes the dispersed thermal expansion material itself, the thermal expansion material can be disposed at a position close to the long body and can be in contact with the long body. Thus, even if the size of the through hole is large, the thermal expansion material can seal the through hole in a short time. Also, since the first tongue-shaped pieces that serve as a screen between inside and outside of the partitioning section are disposed at a plurality of positions along the parts through which the long body penetrates, the fire preventing structure can support the long body and shield the view with certainty.

Also, bending both ends of the cylindrical body forms the first tongue-shaped pieces, so that the first tongue-shaped pieces are formed as one body with the cylindrical body. This reduces the number of component pieces and simplifies the structure.

Also, by fixing the first tongue-shaped pieces to the inner surface of the cylindrical body, the first tongue-shaped pieces can be disposed at any desired position of the cylindrical body.

Also, the forming positions of the first tongue-shaped pieces in the circumferential direction at different positions in the axial direction of the cylindrical body are shifted form each other, and thus gaps between the first tongue-shaped pieces can be shifted, which improves the screen effects.

Also, winding the second foam body including the dispersed thermal expansion material around the outer periphery part of the first foam body can increase a thickness of the cylindrical body, which can provide a larger amount of expansion and make the space between the inner surface of the through hole and the long body smaller. At this time, by forming the second tongue-shaped pieces on the end part of the second foam body and bending the second tongue-shaped pieces outward to form the flange portion, positioning of the axial direction of the cylindrical body against the through hole can be determined.

Also, if the second tongue-shaped pieces are formed between the first tongue-shaped pieces at a side of the one end part of the cylindrical body and the second tongue-shaped pieces are bent outward forming the flange portion, the first foam body alone can provide functions for shielding the view and determination of the positioning of the axial direction of the cylindrical body.

Also, with the metal tape or the metal plate being wound around the outer periphery part of the cylindrical body, crushing or deforming of the cylindrical body can be prevented when inserting the cylindrical body into the through hole, and this facilitates insertion of the cylindrical body into the thorough hole.

At this time, by providing the part of the outer periphery part of the cylindrical body where the cylindrical body exposes in the circumferential direction without the metal tape or the metal plate being wound around, the inner surface of the through hole and the cylindrical body can be adhered to each other due to the deformation of the foam body.

Also, making the length of the first tongue-shaped pieces larger than the half of the inner diameter of the cylindrical body enables the first tongue-shaped pieces to be formed slanted to the diameter direction of the cylindrical body when tip ends of the first tongue-shaped pieces are butted to each other. Thus, the cylindrical body can be in contact with the long body with more certainty and the screen effects can be improved.

Also, attaching the third foam body including the dispersed thermal expansion material to the inside of the cylindrical body can fill the space between the inner surface of the cylindrical body and the long body.

A second aspect of the invention is a fire preventing structure including a through hole provided in a partitioning section, a fire resistant member provided in the through hole, and a long body that is inserted into the fire resistant member. The fire resistant member includes a first foam body including dispersed thermal expansion material. The first foam body forms a cylindrical body. A plurality of first tongue-shaped pieces pointing toward a center are formed in a circumferential direction at a plurality of positions in an axial direction of the cylindrical body. The long body is in contact with the first tongue-shaped pieces.

A space may be formed inside the through hole between at least a part of an inner surface of the cylindrical body and the long body.

According to the second aspect of the invention, a fire preventing structure having a simple structure that is applicable to various sizes of the through hole can be obtained.

Also, forming the space between the long body and the cylindrical body can make the cylindrical body slide smoothly against the long body. Thus, the installation to the through hole is easy.

A third aspect of the invention is a method for installing a fire preventing structure in which a fire resistant member is provided in a through hole formed in a partitioning section. The fire resistant member includes a first foam body including dispersed thermal expansion material. The first foam body forms a cylindrical body. A plurality of first tongue-shaped pieces pointing toward a center are formed in a circumferential direction at a plurality of positions in an axial direction of the cylindrical body. A slit is formed along the axial direction of the cylindrical body at a part of the circumferential direction of the cylindrical body. The method includes a step of inserting a long body into the through hole, and a step of opening up the slit, installing the fire resistant member on an outer periphery of the long body, and inserting the fire resistant member into the through hole.

According to the third aspect of the invention, a fire preventing structure that can be used by only being inserted into a through hole without using mortar or the like can be easily obtained.

### (EFFECTS OF THE INVENTION)

The present invention can provide a fire resistant member that has a simple structure and can be applied to a large through hole, and the like.

### BRIEF DESCRIPTION OF DRAWINGS

FIG. 1A is a side view showing a fire resistant member 1.
FIG. 1B is a front view of the fire resistant member 1.
FIG. 2A is a cross sectional view of the fire resistant member 1, taken along C-C line in FIG. 2B.
FIG. 2B is a cross sectional view of the fire resistant member 1, taken along A-A line in FIG. 2A.
FIG. 3 is a development view showing a foam body 13a before being formed as a cylindrical body 3.
FIG. 4A is a view showing a step in which a fire preventing structure 20 is installed.
FIG. 4B is a view showing a step in which the fire preventing structure 20 is installed.
FIG. 5A is a side view showing a fire resistant member 1a.
FIG. 5B is a front view of the fire resistant member 1a.
FIG. 6 is a cross sectional view showing the fire resistant member 1a, taken along F-F line in FIG. 5A.
FIG. 7A is a view showing a step in which a fire preventing structure 20a is installed.
FIG. 7B is a view showing a step in which the fire preventing structure 20a is installed.
FIG. 8A is a schematic view showing a form of the fire preventing structure 20a in thermal expansion.
FIG. 8B is a schematic view showing a form of the fire preventing structure 20a in thermal expansion.
FIG 9A is a view showing a fire preventing structure 20b.
FIG 9B is a view showing a fire preventing structure 20c.
FIG. 10A is a side view showing a fire resistant member Id.
FIG. 10B is a front view of the fire resistant member Id.
FIG. 11 is a development view showing a foam body 13a before being formed as a cylindrical body 3b.
FIG. 12A is a front view of a fire resistant member 1e.
FIG. 12B is a cross sectional view taken along H-H line in FIG. 12A.

### DESCRIPTION OF SOME EMBODIMENTS

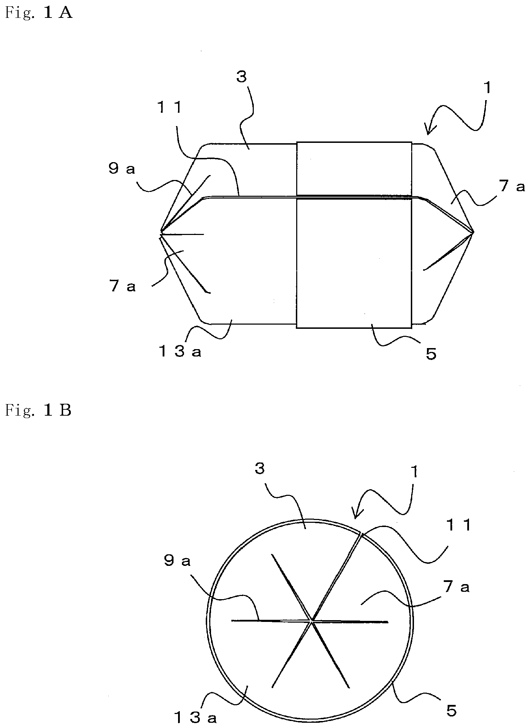

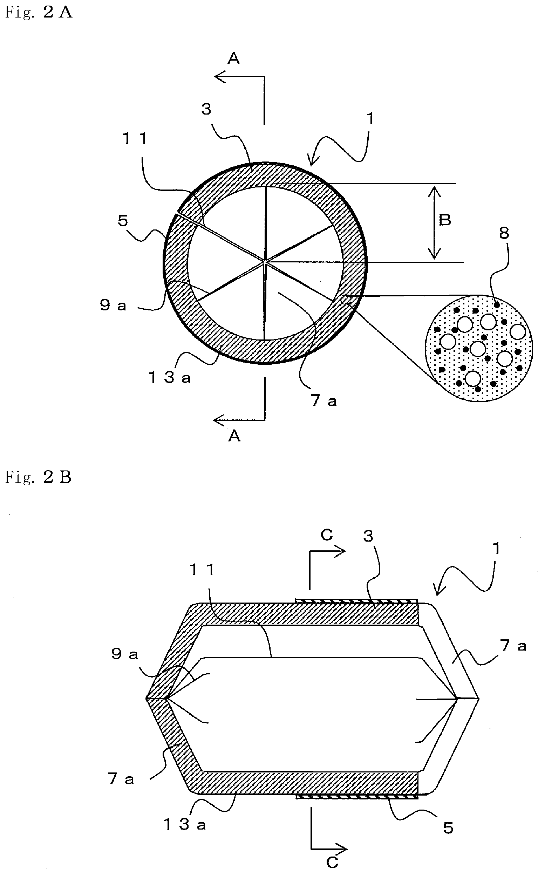

Hereinafter, some embodiments of the present invention will be described in detail. FIG. 1A is a side view and FIG. 1B is a front view showing a fire resistant member 1 according to the present invention. Also, FIG. 2A and FIG. 2B are cross sectional views of the fire resistant member 1: FIG. 2A is a cross sectional view taken along C-C line in FIG. 2B, and FIG. 2B is a cross sectional view taken along A-A line in FIG. 2A. The fire resistant member 1 is used being inserted into a thorough hole formed in a partitioning section that partitions spaces such as walls, floors, and ceilings. The fire resistant member 1 mainly includes a foam body 13a, which is a first foam body, a metal tape 5, and so on.

The foam body 13a is a resin foam body and any material, such as a flame-retardant sponge including polyolefin-based resin or urethane-based resin as a base resin, is applicable. The polyolefin-based resin in the present invention refers to olefin homopolymers and/or olefin copolymers. An olefin homopolymer refers to a copolymer derived from single olefin polymer species. Olefin copolymers includes copolymers including olefin as a component in a broad sense, such as a copolymer derived from one species of olefin and another species of olefin, or a copolymer derived from olefin and a compound other than olefin, such as vinyl compound, having a carbon-carbon double bond. Examples of polyolefin-based resin are low-density polyethylene, straight-chain low-density polyethylene, high-density polyethylene, ethylene-a olefin copolymer, ethylene-propylene copolymer, ethylene-vinyl acetate copolymer, ethylene-ethyl acrylate copolymer, ethylene-vinyl acetate-vinyl chloride copolymer, ethylene-acrylic acid copolymer, and so on. The resin component of the present invention may include one species or two or more species of polyolefin-based resin. Among others, ethylene-vinyl acetate copolymer and/or low-density polyethylene are preferable.

The foam body 13a includes thermal expansion material 8, such as thermally expandable graphite, that is dispersed therein. The foam body 13a is rolled up to form a cylindrical body 3. That is, a slit 11 is formed along an axial direction of the cylindrical body 3 at a part of a circumferential direction of the cylindrical body 3, where end faces of the foam body 13a are butted against each other. The slit 11 allows the cylindrical body 3 to open up into a C shape.

The metal tape 5 is wound around and adhered to a part of an outer periphery surface of the cylindrical body 3. Alternatively, a thin metal plate may be used in place of the metal tape 5. The metal tape 5 is made of aluminum or stainless steel, for example. The metal tape 5 also has the slit 11 formed at the same position as the cylindrical body 3 so that the metal tape 5 can be opened together with the cylindrical body 3. It is preferable that the metal tape 5 is disposed only at one end part side of the fire resistant member 1 so that remaining portions of the outer periphery part of the cylindrical body 3 are exposed continuously in the circumferential direction without the metal tape 5 being wound around. For example, the metal tape 5 is wound around a half -length part of the cylindrical part of the cylindrical body 3, and the rest half-length of the cylindrical part exposes the foam body 13a.

A plurality of incisions 9 are formed at both end parts of the cylindrical body 3 forming tongue-shaped pieces 7a, which are first tongue-shaped pieces. The tongue-shaped piece 7a is bent pointing toward a center at the both end parts of the cylindrical body 3. That is, the plurality of the tongue-shaped pieces 7a are formed, pointing toward the center, in the circumferential direction at a plurality of positions along the axial direction of the cylindrical body 3. The plurality of the tongue-shaped pieces 7a substantially seal opening parts of the cylindrical body 3.

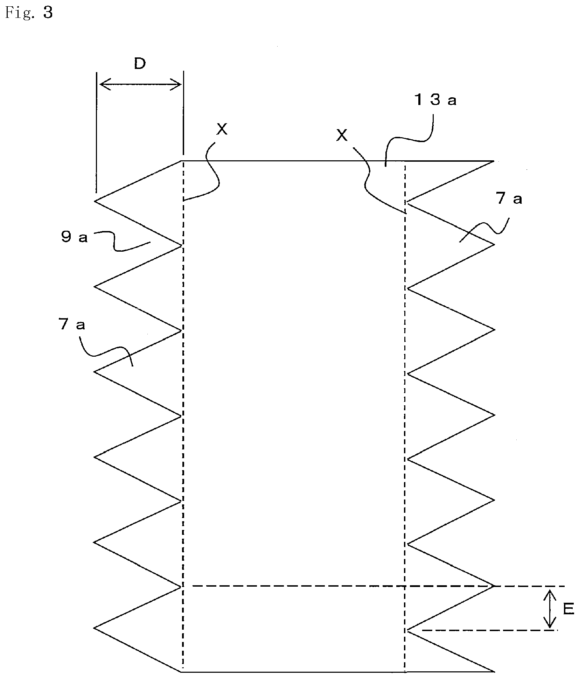

FIG. 3 is a development view of the foam body 13a for forming the cylindrical body 3. Dotted lines X in the drawing are parts where the tongue-shaped pieces 7a are folded. As illustrated, the tongue-shaped piece 7a is formed in a generally triangular shape having a narrower width toward a tip end of the triangle, and the tongue-shaped pieces 7a are formed at a predetermined pitch in a longitudinal direction of the foam body 13a, which corresponds to the circumferential direction of the cylindrical body 3.

Here, a length of the tongue-shaped piece 7a (D in FIG. 3, which is a length to be folded) is preferably longer than a half of an inner diameter of the cylindrical body 3 (B in FIG. 2A, which will be referred hereinafter as 'an inner radius'). If the length D of the tongue-shaped piece 7a is shorter than the inner radius B of the cylindrical body 3, it is impossible to completely seal the both ends of the cylindrical body 3. Thus, it is necessary that the length D of the tongue-shaped piece 7a is at least equal to the inner radius B of the cylindrical body 3.

On the other hand, if the folded length D of the tongue-shaped piece 7a is longer than the inner radius B of the cylindrical body 3, the tongue-shaped piece 7a can be formed slightly slanting against a direction perpendicular to the axial direction of the cylindrical body 3, as shown in FIG. 2B and the like, when tips of the tongue-shaped pieces 7a are butted together. Because of the long tongue-shaped pieces 7a, it is possible to inhibit creating gaps between the tongue-shaped pieces 7a when a long body, which will be discussed below, is inserted into the cylindrical body 3 and the tongue-shaped pieces 7a are deformed.

Also, as shown in FIG. 3, positions where the tongue-shaped pieces 7a are formed at one end part are different from the other end part of the foam body 13a in the longitudinal direction of the foam body 13a. That is, the forming positions of the tongue-shaped pieces 7a on the one end part of the foam body 13a (the forming positions in the longitudinal direction of the foam body 13a) and the forming positions of the tongue-shaped pieces 7a on the other end of the foam body 13a (the forming positions in the longitudinal direction of the foam body 13a) are shifted from each other (E in the drawing). For example, the forming positions of the tongue-shaped pieces 7a on both ends are shifted from each other by half a pitch in the longitudinal direction of the foam body 13a. This enables the forming positions of the tongue-shaped pieces 7a in the circumferential direction on the one end part of the cylindrical body 3 and the forming positions of the tongue-shaped pieces 7a in the circumferential direction on the other end part of the cylindrical body 3 to be shifted from each other.

The foam body 13a shown in FIG. 3 is rolled up, butting both end parts of the longitudinal direction to make a substantially cylindrical shape and, furthermore, bending the tongue-shaped pieces 7 toward the center of the cylinder, to form the cylindrical body 3. The cylindrical body 3 is heated in a state with this shape at a temperature that is lower than a thermal expansion starting temperature of the thermal expansion material 8 (between 80 and 100 °C, for example) so that the cylindrical body 3 can be molded and the shape of the cylindrical body 3 can be preserved.

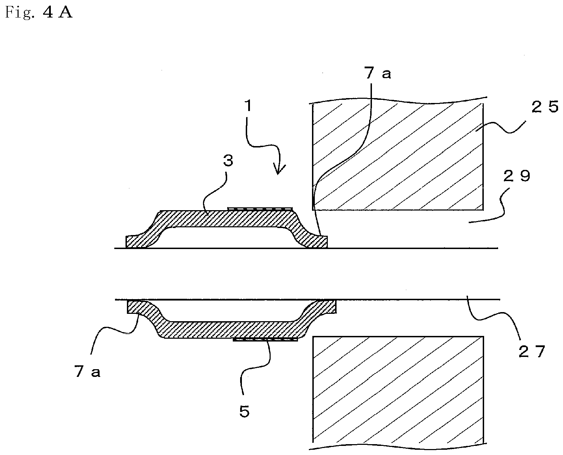

Next, a method for installing a fire preventing structure using the fire resistant member 1 will be described. FIG. 4A is a view showing a state before installing the fire resistant member 1 to a partitioning section 25. First, a through hole 29 is formed in the partitioning section 25, which is a fire prevention partitioning section. The partitioning section 25 is a wall or a floor that partitions an inner space of a structure such as a building.

Next, a long body 27 is inserted into the thorough hole 29 formed in the partitioning section 25. The long body 27 is a cable or a pipe, for example. A plurality of the long bodies may also be inserted. Also, the through hole 29 has a shape corresponding to an outer shape of the cylindrical body 3 of the fire resistant member 1, and the illustration shows the through hole 29 that is in a substantially circular shape.

Next, the fire resistant member 1 is installed onto the long body 27. As mentioned above, the fire resistant member 1 has the slit 11. Thus, by opening up the slit 11, the fire resistant member 1 can be easily installed from a side of the long body 27 onto an outer periphery of the long body 27.

Also, as mentioned above, when the fire resistant member 1 is installed onto the long body 27, the tongue-shaped pieces 7a deform along the long body 27 adhering to the long body 27. Because of this deformation of the tongue-shaped pieces 7a, the fire resistant member 1 can adapt to various size and number of the long body 27.

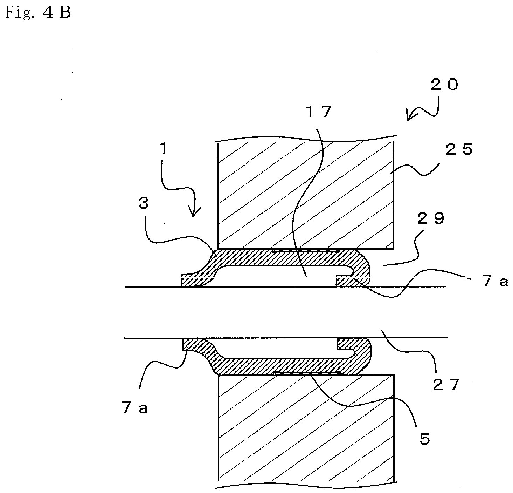

Next, as shown in FIG. 4B, the fire resistant member 1 is moved along the long body 27 to be inserted into the through hole 29. Here, the metal tape 5 is adhered in the circumferential direction at one of the end part sides of the cylindrical body 3. The metal tape 5 enhances rigidity of the corresponding part, and thus crushing or deforming of the cylindrical body 3 can be prevented if the cylindrical body 3 is inserted and pushed into the through hole 29 with the end part side having the metal tape 5 being wound around pointing toward a tip end side of an insertion direction.

Also, as mentioned above, the long body 27 is in contact with the tongue shaped pieces 7a at a plurality of positions in the axial direction of the cylindrical body 3. In particular, the tongue-shaped pieces 7a at the tip end side of the insertion direction are folded toward an interior of the cylindrical body 3 as shown in the drawing, so that there are some parts having double layers of the foam body 13a. For this reason, the tongue-shaped pieces 7a can support the long body 27 with certainty. Also, in the present embodiment, the inner diameter of the cylindrical body 3 is larger than an outer diameter of the long body 27 (if there are a plurality of the long bodies 27, a diameter of a circle encircling all the long bodies 27). Thus, inside the through hole 29, there is a space 17 formed between at least a part of an inner surface of the cylindrical body 3 and the long body 27. Forming the space 17 in this way enables to reduce frictional resistance when the fire resistant member 1 is moved relatively to the long body 27.

As above, a fire preventing structure 20 including the fire resistant member 1, which is provided in the through hole 29 formed in the partitioning section, and the long body 27, which is inserted into the fire resistant member 1, can be installed.

As described above, the fire resistant member 1 according to the present embodiment can easily provide the fire preventing structure 20 without using mortar or the like. Also, the fire resistant member 1 is light in weight since the foam body 13a forms most of the fire resistant member 1. Also, since the cylindrical part of the cylindrical body 3 and the tongue-shaped pieces 7a are formed of the foam body 13a as one body, the structure is simple with a small number of components. Also, dispersion of the thermal expansion material 8 inside the cylindrical body 3 can reduce a step of attaching a separate sheet-shaped or putty-like thermally expandable member to the foam body, and this facilitates manufacture of the fire resistant member 1. A thermally expandable putty may also be used on an inner circumference of the cylindrical body 3 at the same time. This can further enhance the thermal expansion performance of the fire resistant member 1.

The inner diameter of the through hole 29 is approximately the same as or slightly smaller than the outer diameter of the cylindrical body 3. Also, the cylindrical body 3 is formed of the foam body 13a and easily deforms. Thus, an outer periphery surface of the cylindrical body 3 can be adhered to an inner surface of the through hole 29. In particular, the outer periphery part of the cylindrical body 3 has a part where the cylindrical body 3 is exposed continuously in the circumferential direction without the metal tape 5 being wound around. At this part, the outer periphery part of the cylindrical body 3 has a cushioning property, absorbing unevenness of the inner periphery surface and errors of the diameter of the through hole 29, and can be adhered to the inner surface of the through hole 29 with certainty.

Also, since most of the inner surface of the cylindrical body 3 is not adhered to the long body 27 with the space 17 being formed, it is possible to reduce frictional resistance when the fire resistant member 1 is moved relatively to the long body 27. In particular, since the foam body 13a includes the dispersed thermal expansion material 8, the foam body 13a does not slide well against the surface of the long body 27 compared to a typical urethane foam. Thus, reducing contact area between the long body 27 and the cylindrical body 3 can reduce friction at the time of relative movement and facilitate the movement.

Also, the outer periphery surface of the cylindrical body 3 contacts with the inner surface of the through hole 29, and at least the tongue-shaped pieces 7a of the cylindrical body 3 contact the long body 27. Thus, at the time of fire, for example, heat transmits from the long body 27 to the foam body 13a, which immediately starts to expand. Thus, even if the size of the through hole 29 is large, the cylindrical body 3 between the long body 27 and the inner surface of the through hole 29 can seal the through hole 29 with certainty. Although the cylindrical body 3 at the parts corresponding to the space 17 starts expanding later than the tongue-shaped pieces 7a do, at least the tongue-shaped pieces 7a immediately start to expand and seal the thorough hole 29 due to the heat from a side of the fire and the heat from the long body 27, and the entire cylindrical body 3 eventually expands and seals the thorough hole 29 with certainty.

Also, the tongue-shaped pieces 7a serve as a screen between both sides of the partitioning section 25. At this time, the tongue-shaped pieces 7a are sufficiently long in length, and thus there are hardly any gaps created among the tongue-shaped pieces 7a when the tongue-shaped pieces 7a are deformed along the long body 27. Also, even if there is a gap between adjacent tongue-shaped pieces 7a, the gap between the tongue-shaped pieces 7a is not formed on a straight line along the axial direction of the through hole 29 since the circumferential positions of the tongue-shaped pieces 7a (the incisions 9a) on both end parts of the cylindrical body 3 are shifted from one another. Thus, it is possible to shield the view from one side to the other side of the partitioning section 25.

The fire resistant member 1 can also be installed into a substantially rectangular through hole. In such a case, the outer shape of the foam body 13a may be molded into a shape corresponding to the shape of the through hole. Also, although the fire resistant member 1 is installed after inserting the long body 27 into the through hole 29 in the present embodiment, the long body 27 may be inserted after disposing the fire resistant member 1 inside the through hole 29. In such a case, the slit 11 is unnecessary. Also, the metal tape 5 may be wound around after opening the slit 11 and installing the fire resistant member 1 onto the outer periphery of the long body 27. In such a case, the metal tape 5 is wound around the entire periphery and the slit 11 of the foam body 13a may be covered.

Also, the partitioning section 25 may be a hollow wall. In such a case, with adjustments to the length and position of the metal tape 5, the metal tape 5 can serve as a sleeve that seals the hollow part of the hollow wall. This prevents the thermal expansion material 8 from expanding into the hollow part and restricts direction of the expansion.

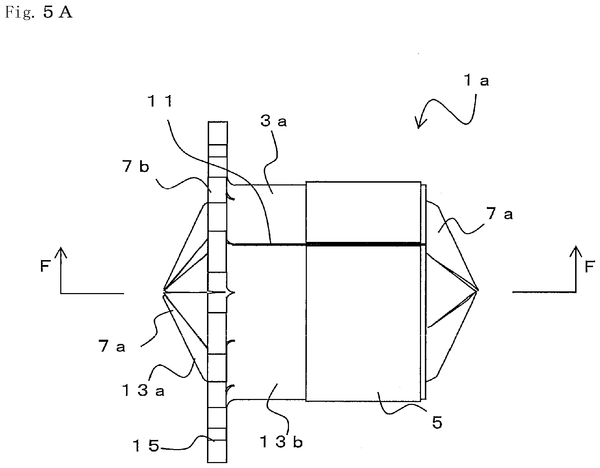

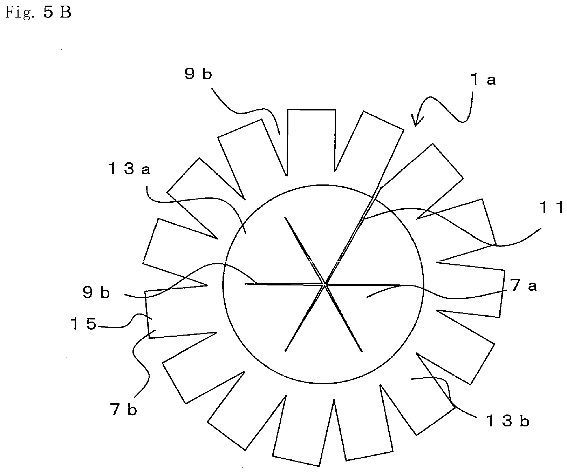

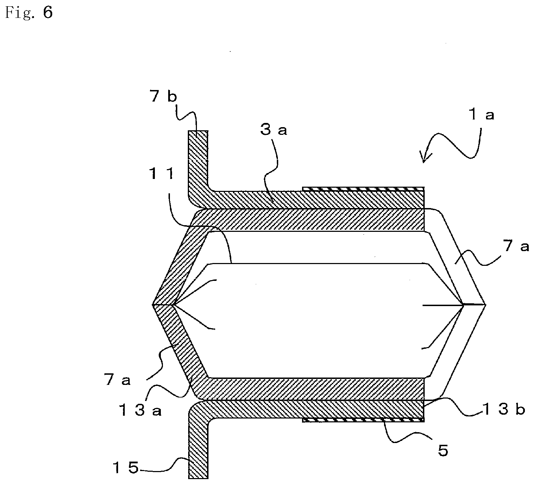

Next, a second embodiment will be described. FIG. 5A is a side view and FIG. 5B is a front view of a fire resistant member 1a according to the second embodiment. Also, FIG. 6 is a cross sectional view taken along F-F line in FIG. 5A. In the descriptions hereinafter, structures having the same functions as the fire resistant member 1 will have the same notations as in FIG. 1A to FIG. 4B and redundant descriptions will be omitted.

The fire resistant member 1a differs from the fire resistant member 1 in that a foam body 13b is further disposed therein. A cylindrical body 3a of the fire resistant member 1a is formed by further winding the foam body 13b, which is a second foam body, onto the outer periphery part of the cylindrical body 3 that is formed of the foam body 13a. Similarly to the foam body 13a, the foam body 13b includes the dispersed thermal expansion material 8. The metal tape 5 is wound around the outer periphery of the foam body 13b, which is on the outermost periphery. Also, each of the foam body 13a, the foam body 13b, and the metal tape 5 has the slit 11 formed at the same position.

The foam body 13a and the foam body 13b are joined together by using an adhesive agent or double sided tape. Alternatively, the foam body 13a and the foam body 13b may be joined by stapling or sewing.

A plurality of incisions 9b are formed at one end part of the foam body 13b, forming tongue-shaped pieces 7b, which are second tongue-shaped pieces. The plurality of the tongue-shaped pieces 7b are bent outward at substantially right angles to the axial direction at a side of the one end part of the cylindrical body 3a to form a flange portion 15. Also in this case, the foam body 13b is rolled up with the tongue-shaped pieces 7b being bent, and then heated at a temperature below the expansion temperature of the thermal expansion material 8 so as to be molded into the shape.

A length of the cylindrical portion of the foam body 13a without the tongue-shaped pieces 7a is approximately the same as a length of the cylindrical portion of the foam body 13b without the tongue-shaped pieces 7b. Also, the metal tape 5 is disposed on an end part side that is opposite to the end part side where the tongue-shaped pieces 7b are formed, and thus, on the side where the tongue-shaped pieces 7b are formed, the foam body 13b is exposed to an outer surface without the metal tape 5 wound around on the outer periphery of the cylindrical body 3a.

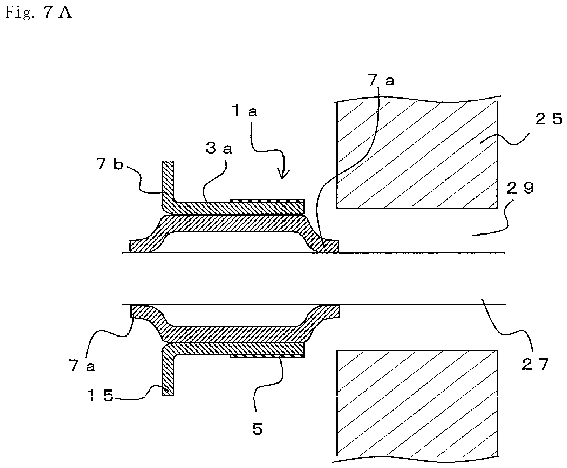

Next, a method for installing a fire preventing structure using the fire resistant member 1a will be described. FIG. 7A is a view showing a state before installing the fire resistant member 1a to the partitioning section 25. As mentioned above, the through hole 29 is formed in the partitioning section 25, which is a fire preventing section, and then the long body 27 is inserted into the through hole 29. Next, the fire resistant member 1a is installed onto the long body 27. As mentioned above, the slit 11 is provided for each of the fire resistant member 1a, the foam bodies 13a and 13b, and the metal tape 5. By opening up the slits 11, the fire resistant member 1a can be easily installed from a side of the long body 27 onto the outer periphery of the long body 27. The metal tape 5 may be wound around the entire periphery after installing the foam bodies 13a and 13b onto the long body 27.

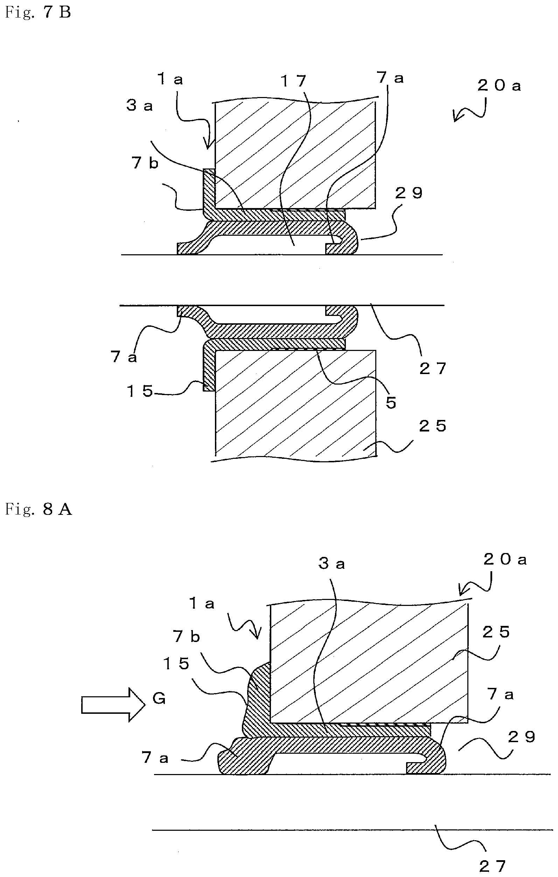

Next, as shown in FIG. 7B, the fire resistant member 1a is moved along the long body 27 so that the cylindrical body 3b is inserted into the through hole 29. Here, an outer diameter of the flange portion 15 is sufficiently larger than the inner diameter of the through hole 29. Thus, inserting the fire resistant member 1a into the through hole 29 until the flange portion 15 is in contact with a surface of the partitioning section 25 enables an insertion margin of the fire resistant member 1a inside the through hole 29 to be constant. As above, a fire preventing structure 20a can be formed.

Next, behavior of the fire preventing structure 20a at the time of fire will be described. FIG. 8A is a schematic view showing a state of the fire preventing structure 20a in which a fire starts on a side of the partitioning section 25 where the flange portion 15 is disposed. In an illustration shown in FIG. 8A, the foam bodies 13a and 13b expand due to heat from the side of the flange portion 15 (an arrow G in the drawing).

Here, the tongue-shaped pieces 7a and 7b (the flange portion 15) of the fire preventing structure 20a are formed of the foam body 13b including the dispersed thermal expansion material 8. Thus, the flange portion 15 of the fire preventing structure 20a also expands thermally.

As mentioned above, the tongue-shaped pieces 7a immediately starts expanding at the time of fire since the tongue-shaped pieces 7a are in contact with the long body 27 and are exposed to a room at a high temperature. The flange portion 15 also immediately starts expanding since the flange portion 15 is also exposed to the room at the high temperature.

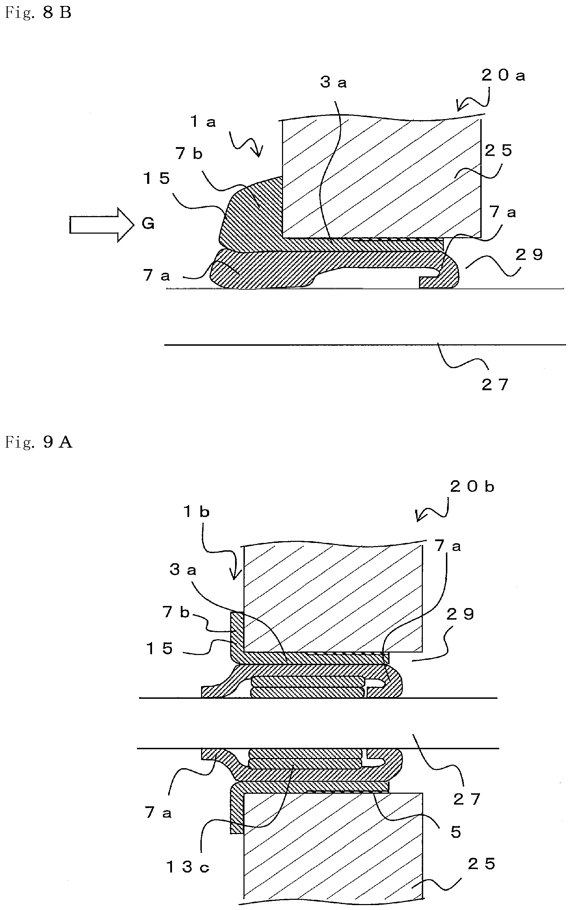

FIG. 8B is a view showing a sate in which the expansion is further progressed. Part of the tongue-shaped pieces 7a of the foam body 13a expand toward an interior of the room, and the other part of the tongue-shaped pieces 7a expand toward the long body 27. For example, although an outer jacket or the like of the long body 27 may be burned and lost at the time of fire reducing the diameter of the long body 27, even in such the case, the through hole 29 can be sealed with certainty since the foam body 13a expands toward the long body 27.

On the other hand, the flange portion 15 expands mainly toward the interior of the room. For this reason, when the expansion of the flange portion 15 progresses, an effect as if the through hole 29 is extended can be obtained. This enables to prevent the heat on the one side of the partitioning section 25 from travelling to the opposite side of the partitioning section 25.

As described above, according to the second embodiment, the same effects as in the first embodiment can be obtained. Also, by laying the foam body 13b over the foam body 13a and forming the flange portion 15 by the foam body 13b, the insertion margin of the fire resistant member 1a into the through hole 29 can be easily found, and thus positioning of the cylindrical body 3a in the axial direction against the through hole 29 can be easily determined.

At this time, since the flange portion 15 is formed of a member that is different from the tongue-shaped pieces 7a, the flange portion 15 stays in shape unaffected by the deformation of the tongue-shaped pieces 7a. Also, since the flange portion 15 includes the thermal expansion material 8, the flange portion 15 can thermally expand toward the interior of the room at the time of fire and can provide an effect of extension of the through hole 29.

Also, the flange portion 15 is formed of a foam body and thus can be crushed easily. For example, if the partitioning section 25 is a floor part and the fire resistant member 1a is disposed from an upper side of the floor, a part of the fire resistant member 1a protrudes from an upper surface of the partitioning section 25 for a thickness of the flange portion 15. However, the flange portion 15 can be easily crushed, so installing a floorboard, for example, can suppress the protrusion at a region of the flange portion 15.

On a rear side of the flange portion 15 (a surface contacting with the partitioning section 25), metal tape or the like can be attached. This can increase rigidity of the flange portion 15.

Next, a third embodiment will be described. FIG. 9A is a view showing a fire preventing structure 20b using a fire resistant member 1b according to the third embodiment. The fire resistant member 1b has almost the same structure as the fire resistant member 1a except that a foam body 13c, which is a third foam body, is attached inside the cylindrical body 3a. Similarly to the foam body 13a, the foam body 13c includes the dispersed thermal expansion material 8.

The foam body 13c and the foam body 13a are joined together by using an adhesive agent or double sided tape, for example. Also, the foam body 13c includes the slit 11 formed at the same position as in the foam bodies 13a, 13b and the metal tape 5.

Although the illustration shows the foam body 13c being disposed in double layers, the foam body 13c may also be single-layered or three or more layered. Also, in the fire preventing structure 20b, although not limited thereto, the foam body 13c is disposed over substantially the entire longitudinal direction of the cylindrical body 3a and an innermost periphery surface of the foam body 13c is in contact with the long body 27.

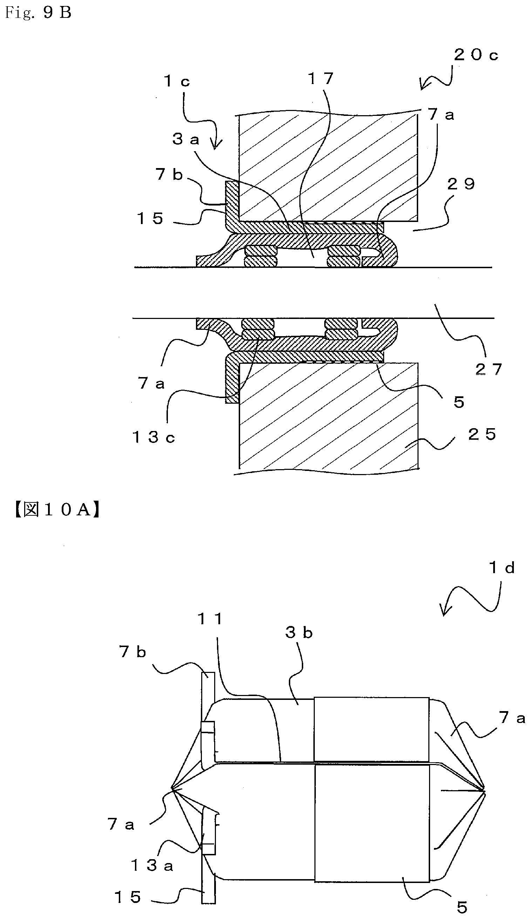

For example, as in a fire preventing structure 20c using a fire resistant member 1c shown in FIG. 9B, the foam body 13c may be divided and disposed at some parts of the inner surface of the cylindrical body 3a. In the fire resistant member 1c, the foam body 13c is disposed at proximity of each end part of the cylindrical body 3a, whereas at the substantial center part of the axial direction of the cylindrical body 3a, the foam body 13c is not disposed and the space 17 is formed.

According to the third embodiment, the same effects as in the second embodiment can be obtained. Also, using the foam body 13c can seal the through hole 29 with certainty by expansion of the foam body 13c even when the space 17 is too large and an amount of expansion of the foam body 13a and the like is insufficient. At this time, dividing the foam body 13c and leaving the space 17 at some parts can decrease the contacting area between the foam body 13c and the long body 27, which can facilitate the relative movement of the fire resistant member 1c against the long body 27. Also, the foam body 13c can provide the screen effect between the inside and outside of the partitioning section 25 with more certainty.

Although the foam body 13c is disposed inside the cylindrical body 3a in the present embodiment, the foam body 13c may be disposed inside the cylindrical body 3. Also, the foam body 13c may be disposed on the outer periphery of the foam body 13a or on the outer periphery of the foam body 13b. Also, instead of the foam body 13c, or in addition to the foam body 13c, thermally expandable putty may be used inside the cylindrical body 3a. This can also improve the thermal expansion performance.

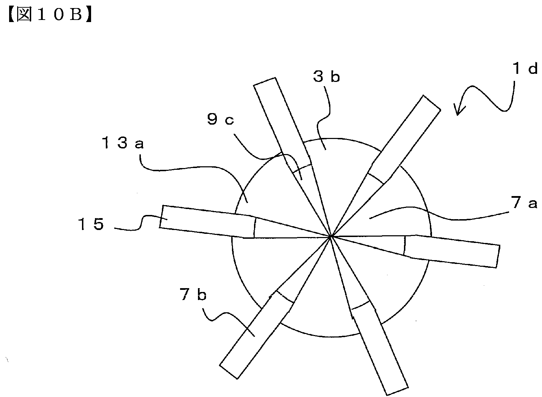

Next, a fourth embodiment will be described. FIG. 10A is a side view showing a fire resistant member 1d according to the fourth embodiment, and FIG. 10B is a front view of the fire resistant member Id. The fire resistant member 1d has almost the same structure as the fire resistant member 1a except that the cylindrical body 3b is formed only of the foam body 13a.

In the fire resistant member 1d, the foam body 13a is rolled up to be in a cylindrical shape. The plurality of the tongue-shaped pieces 7a are formed at each end part of the cylindrical body, and the tongue-shaped pieces 7a are bent toward the center. Also, at one end part side of the cylindrical body 3b, the tongue-shaped pieces 7b that are to be bent toward the outer side are formed between the tongue-shaped pieces 7a. Similarly to the fire resistant member 1a, the tongue-shaped pieces 7b are bent substantially vertically to the axial direction of the cylindrical body 3b to form the flange portion 15.

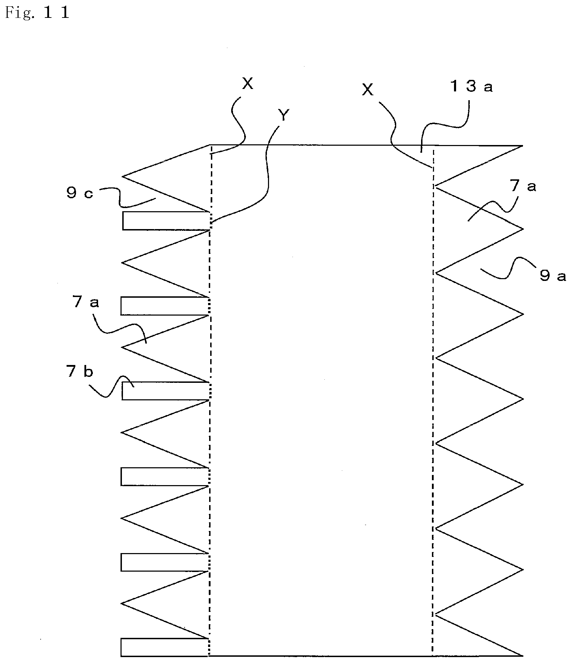

FIG. 11 is a development view of the foam body 13a for forming the cylindrical body 3b. A dotted line X in the drawing is a part where the tongue-shaped piece 7a is bent, and a dotted line Y in the drawing is a part where the tongue-shaped piece 7b is bent. The bending directions at the dotted line X and the dotted line Y are opposite from each other.

On one end part side of the foam body 13a (on a left side in the drawing), incisions 9c are formed and the tongue-shaped pieces 7a and 7b are formed alternately. The tongue-shaped pieces 7a and 7b may not always alternate with each other. The tongue-shaped piece 7a is formed in a generally triangular shape with a narrower width toward a tip end of the triangle, and the tongue-shaped pieces 7a are formed at a predetermined pitch in a longitudinal direction of the foam body 13a (the direction corresponding to the circumferential direction of the cylindrical body 3b). The tongue-shaped piece 7b is in a generally rectangular shape, and the tongue-shaped pieces 7b are formed at a predetermined pitch in a longitudinal direction of the foam body 13a (the direction corresponding to the circumferential direction of the cylindrical body 3b). A width of the tongue-shaped piece 7b may be narrower than a base width of the tongue-shaped piece 7a. Also, the other end part side of the foam body 13a (a right side in the drawing) is similar to the one shown in FIG. 3.

Preferably, the forming pitch of the tongue-shaped pieces 7a in the longitudinal direction of the foam body 13a is the same at both ends of a width direction of the foam body 13a. Also, as mentioned above, it is preferable that the tongue-shaped pieces 7a are formed so that the forming positions of the tongue-shaped pieces 7a in the longitudinal direction on the one end part of the foam body 13a and the forming positions of the tongue-shaped pieces 7a in the longitudinal direction on the other end part of the foam body 13a are shifted from each other. This enables the forming positions of the tongue-shaped pieces 7a in the circumferential direction on the one end of the cylindrical body 3b and the forming positions of the tongue-shaped pieces 7a in the circumferential direction on the other end part of the cylindrical body 3b to be shifted from each other. For example, the gaps formed between the tongue-shaped pieces 7a because of the tongue-shaped pieces 7b formed on one end side of the cylindrical body 3b can be sealed by the tongue-shaped pieces 7a on the other end of the cylindrical body 3b, which can improve the screen effect.

According to the fourth embodiment, the same effects as in the second embodiment can be obtained. Also, the flange portion 15 can be formed without a plurality of layers of the foam body 13b, allowing the structure to be simpler.

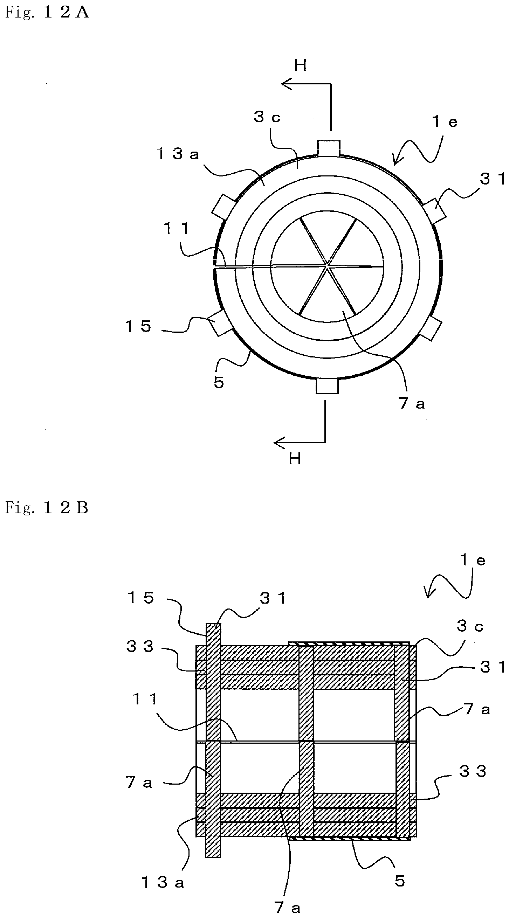

Next, a fifth embodiment will be described. FIG. 12A is a front view of a fire resistant member 1e according to the fifth embodiment, and FIG. 12B is a cross sectional view taken along H-H line in FIG. 12A. The fire resistant member 1e has the same structure as the fire resistant member 1 and the like in regard to the slit 11 and the metal tape 5. However, the tongue-shaped pieces 7a of the fire resistant member 1e are formed, not by bending the both ends of the cylindrical body, but separately from a cylindrical body 3c.

The foam body 13a is rolled up to form the cylindrical body 3c. In the illustrated example, the plurality of layers of the foam body 13a are disposed. The plurality of the tongue-shaped pieces 7a are disposed in the circumferential direction, pointing toward the center, at a plurality of parts of the axial direction of the cylindrical body 3c.

At each part, a hole 33 is formed in the cylindrical body 3c, and an insertion portion 31, which is formed on a rear end side of the tongue-shaped piece 7a, is inserted into the hole 33 and fixed to the cylindrical body 3c. The tongue-shaped pieces 7a may be disposed at three places along the axial direction of the cylindrical body 3c as shown in the illustrations, or may be disposed at two places, or may be disposed at four or more places. Also, the tongue-shaped pieces 7a may be fixed by joining to an inner surface of the cylindrical body 3c using an adhesive agent or the like.

The inserting portion 31 of the tongue-shaped pieces 7a disposed on one end part side of the cylindrical body 3c is formed to have a length that is larger than a thickness of the cylindrical body 3c. Thus, a part of the inserting portion 31 protrudes to an outer part of the cylindrical body 3c. The protruding inserting portion 31 can serve as the flange portion 15. The length of the inserting portion 31 of the tongue-shaped pieces 7a at the other parts are set to be equal to or less than the thickness of the cylindrical body 3c. Thus, the inserting portion 31 does not protrude from the cylindrical body 3c. The flange portion 15 is not always necessary.

A protruding length of each of the tongue-shaped pieces 7a from the inner surface of the cylindrical body 3c is preferably half of the inner diameter of the cylindrical body 3c or more. In particular, it is preferable that the length of the tongue-shaped piece 7a is larger than the half of the inner diameter of the cylindrical body 3c. Also, it is preferable that the forming position in the circumferential direction of the tongue-shaped pieces 7a at a part of the axial direction of the cylindrical body 3c and the forming position in the circumferential direction of the tongue-shaped pieces 7a at the other part of the axial direction of the cylindrical body 3c are shifted from each other.

According to the fifth embodiment, the same effects as in the first embodiment can be obtained. Also, each of the tongue-shaped pieces 7a can be formed at positions other than the end parts of the cylindrical body 3c.

Although the embodiments of the present invention have been described referring to the attached drawings, the technical scope of the present invention is not limited to the embodiments described above. It is obvious that persons skilled in the art can think out various examples of changes or modifications within the scope of the technical idea disclosed in the claims, and it will be understood that they naturally belong to the technical scope of the present invention.

For example, needless to say, the structures of each embodiment can be combined with each other. For example, for the cylindrical body 3b, another layer of the foam body 13c may be further disposed. Also, for the fire resistant members 1 to 1d, in addition to the tongue-shaped pieces 7a that are bent at the end part of the cylindrical body, the hole 33 may be formed at positions other than the end parts and the tongue-shaped pieces 7a may be further disposed therein. Also, although the cylindrical body is formed by rolling up the foam body, rolling is not always necessary to form the cylindrical body. For example, the cylindrical body may be formed by extrusion molding. In such the case, the slit may be formed along the axial direction of the cylindrical body to form an opening. That is, any method that can form the cylindrical body from the foam body may be used.

### DESCRIPTION OF NOTATIONS

- 1, 1a, 1b, 1c, 1d, 1e: fire resistant member
- 3, 3a, 3b, 3c: cylindrical body
- 5: metal tape
- 7a, 7b: tongue-shaped piece
- 8: thermal expansion material
- 9a, 9b, 9c: incision
- 11: slit
- 13a, 13b, 13c: foam body
- 15: flange portion
- 17: space
- 20, 20a, 20b, 20c: fire preventing structure
- 25: partitioning section
- 27: long body
- 29: through hole
- 31: inserting portion
- 33: hole

## Claims

1. A fire resistant member that is inserted into a through hole in a partitioning section, the fire resistant member comprising:
a first foam body including thermal expansion material that is dispersed in the first foam body, wherein
the first foam body forms a cylindrical body;
a plurality of first tongue-shaped pieces pointing toward a center of the cylindrical body are disposed in a circumferential direction of the cylindrical body at a plurality of positions in an axial direction of the cylindrical body.

2. The fire resistant member according to claim 1, wherein
a plurality of incisions are formed at both end parts of the cylindrical body forming the first tongue-shaped pieces that are bent toward the center at both end parts of the cylindrical body.

3. The fire resistant member according to claim 1, wherein
the first tongue-shaped pieces are fixed to an inner surface of the cylindrical body.

4. The fire resistant member according to claim 1, wherein
forming positions in the circumferential direction of the first tongue-shaped pieces at a part of the axial direction of the cylindrical body and forming positions in the circumferential direction of the first tongue-shaped pieces at another part of the axial direction of the cylindrical body are shifted from each other.

5. The fire resistant member according to claim 1, wherein
the cylindrical body is formed with a second foam body that is wound around an outer periphery part of the first foam body, the second foam body including the thermal expansion material dispersed in the second foam body;
a plurality of incisions are formed at one end part of the second foam body forming second tongue-shaped pieces; and
the second tongue-shaped pieces are bent outward at a side of the one end part of the cylindrical body forming a flange portion.

6. The fire resistant member according to claim 2, wherein
the second tongue-shaped pieces are formed between the first tongue-shaped pieces at a side of the one end part of the cylindrical body, the second tongue-shaped pieces being bent outward forming the flange portion.

7. The fire resistant member according to claim 1, wherein
a metal tape or a metal plate is wound around an outer periphery part of the cylindrical body.

8. The fire resistant member according to claim 7, wherein
there is a part of the outer periphery part of the cylindrical body in which the cylindrical body is exposed in the circumferential direction without having the metal tape or the metal plate being wound around.

9. The fire resistant member according to claim 1, wherein
a length of the first tongue-shaped piece is larger than a half of an inner diameter of the cylindrical body.

10. The fire resistant member according to claim 1, wherein
a third foam body including the thermal expansion material dispersed in the third foam body is attached inside the cylindrical body.

11. Afire preventing structure comprising:
a through hole provided in a partitioning section;
a fire resistant member provided in the through hole; and
a long body that is inserted into the fire resistant member, wherein
the fire resistant member comprises a first foam body including dispersed thermal expansion material;
the first foam body forms a cylindrical body;
a plurality of first tongue-shaped pieces pointing toward a center are formed in a circumferential direction at a plurality of positions in an axial direction of the cylindrical body; and
the long body is in contact with the first tongue-shaped pieces.

12. The fire preventing structure according to claim 11, wherein
a space is formed inside the through hole between at least a part of an inner surface of the cylindrical body and the long body.

13. A method for installing a fire preventing structure in which a fire resistant member is provided in a through hole formed in a partitioning section, wherein
the fire resistant member comprises a first foam body including dispersed thermal expansion material;
the first foam body forms a cylindrical body;
a plurality of first tongue-shaped pieces pointing toward a center are formed in a circumferential direction at a plurality of positions in an axial direction of the cylindrical body; and
a slit is formed along the axial direction of the cylindrical body at a part of the circumferential direction of the cylindrical body, the method comprising:
a step of inserting a long body into the through hole; and
a step of opening up the slit, installing the fire resistant member on an outer periphery of the long body, and inserting the fire resistant member into the through hole.
